# FASCICULE DE BREVET EUROPEEN

(11) **EP 3 994 012 B1**
(45) Date de publication et mention de la délivrance du brevet: **27.03.2024**
(21) Numéro de dépôt: 20735423.4
(22) Date de dépôt: 04.07.2020
(51) Int. Cl.: B60B 19/02, B60B 19/04

(54) **ROUE TRANSFORMABLE ADAPTÉE POUR FRANCHIR TOUT TYPE DE TERRAIN ET ROBOT AUTONOME ÉQUIPÉ D'AU MOINS UNE TELLE ROUE**
UMWANDELBARES RAD ZUM ÜBERQUEREN JEGLICHER ART VON GELÄNDE UND AUTONOMER ROBOTER MIT MINDESTENS EINEM SOLCHEN RAD
TRANSFORMABLE WHEEL SUITABLE FOR CROSSING ANY TYPE OF TERRAIN AND AUTONOMOUS ROBOT EQUIPPED WITH AT LEAST ONE SUCH WHEEL

(30) Priorité: 04.07.2019 FR 1907477; 12.11.2019 FR 1912639
(43) Date de publication de la demande: 11.05.2022
(73) Titulaire: Borobo, 06200 Nice (FR)
(72) Inventeur: CHANUDET, Patrick, 06140 VENCE (FR); DENYSOV, Yevgen, 06200 NICE (FR)
(74) Mandataire: Bonneau, Florence
(86) Numéro de dépôt international: PCT/EP2020/068916
(87) Numéro de publication internationale: WO 2021/001571

(56) Documents cités:
- WO-A1-2018/050370
- CN-A- 108 403 318
- DE-A1-102011 052 615
- DE-A1-102013 006 690

## Description

### Domaine technique

La présente invention concerne le domaine technique des robots autonomes et des moyens équipant de tels robots pour faciliter leur déplacement sur tout type de terrain tel que des escaliers et concerne en particulier une roue transformable adaptée pour franchir tout type de terrain et robot autonome équipé d'au moins une telle roue.

### Etat de la technique

Les roues transformables en particulier pour fauteuil roulant pour se déplacer à la fois sur des terrains plats et pour franchir des obstacles tels que des escaliers sont connues.

Par exemple, il existe des roues munies de dispositifs mécaniques qui, en se dépliant forment des saillies qui permettent à la roue de s'accrocher aux marches. Le diamètre extérieur de la roue est ainsi augmenté mais la distance entre l'axe de la roue et le point d'appui aussi ce qui présente l'inconvénient de nécessiter un effort de couple moteur plus important. Une telle roue est par exemple décrite dans le document US2011/0127732.

Il existe également des roues transformables dont le diamètre extérieur reste constant quel que soit la configuration de la roue. C'est le cas par exemple de la roue décrite dans le document WO2018/050370. Dans ce document un système de roue est décrit comprenant deux parties distinctes et identiques en forme de croix avec une pluralité de branches, les deux parties étant reliées l'une à l'autre par une liaison pivot autour de l'axe de la roue de façon à pivoter entre deux positions.

Une première position adaptée pour le déplacement sur terrain plat, où les deux parties sont décalées angulairement l'une par rapport à l'autre autour de l'axe central de manière à former un disque plein dans le plan perpendiculaire à l'axe de la roue.

Une seconde position adaptée pour le déplacement sur escaliers où les deux parties distinctes sont décalées angulairement l'une de l'autre autour de l'axe de la roue de manière à ce qu'une des parties recouvre entièrement l'autre.

Les deux parties distinctes étant identiques, elles forment chacune un disque de diamètre identique dont le pourtour est en permanence en contact avec le sol et qui lorsqu'elles sont dans leur première position forment une bande de roulement à peu près continue.

L'inconvénient de ce système de roue réside dans le passage d'une position à l'autre. En effet, lorsqu'une des parties distinctes se décale par rapport à l'autre, leur circonférence extérieure qui forme la bande de roulement reste en permanence en contact avec le sol ce qui génère des frottements. Ces frottements sont d'autant plus importants et gênants si la charge à transporter est importante.

### Exposé de l'invention

C'est pourquoi, le but de l'invention est de proposer une roue pour permettre le roulage sur tout type de terrain et pour faciliter le passage d'obstacles tels que des marches d'escalier et qui pallient aux inconvénients précités.

Un autre but de l'invention est de proposer un robot autonome muni d'au moins une telle roue.

L'objet de l'invention est donc une roue comprenant :
- Une première partie entraînée en rotation autour d'un axe central de rotation, muni d'une pluralité de branches s'inscrivant dans un cercle de diamètre égal au diamètre de la roue, la surface externe circulaire de l'ensemble de ces branches formant une première partie de la bande de roulement de la roue,
- Une seconde partie mobile par rapport à la première partie entre une première position et une seconde position, la seconde partie comprenant une pluralité de branches s'inscrivant dans un cercle de centre passant par l'axe de rotation,
- des moyens pour passer d'une position à l'autre et inversement, la première position correspondant à une position fermée de la roue dans laquelle la roue a une circonférence circulaire complète formant une bande de roulement circulaire continue et la seconde position correspondant à une position ouverte la roue dans laquelle la roue n'a pas une circonférence circulaire complète et forme une bande de roulement circulaire discontinue. Selon les caractéristiques principales de l'invention, la roue comprend une troisième partie composée d'une pluralité de dents dont la surface externe circulaire forme une seconde partie de la bande de roulement de la roue, les dents étant montées pivotantes sur des axes pivots de la première partie, sont entraînées par le mouvement de la seconde partie et sont mobiles entre deux positions.

### Description brève des figures

Les buts, objets et caractéristiques de l'invention apparaîtront plus clairement à la lecture de la description qui suit faite en référence aux dessins dans lesquels :
[Fig. 1] représente une vue de face de la première partie de la roue selon l'invention,
[Fig. 2] représente une vue de face de la seconde partie de la roue selon l'invention,
[Fig. 3] représente une vue en perspective d'une dent de la roue selon l'invention,
[Fig. 4a] représente une première vue de dessus de l'intérieur de la roue selon l'invention dans sa position fermée,
[Fig. 4b] représente une vue de dessus de l'intérieur de la roue selon l'invention dans sa position ouverte,
[Fig. 5a] représente une vue en perspective de la quatrième partie de la roue selon l'invention,
[Fig. 5b] représente une vue de dessus de la quatrième partie selon l'invention,
[Fig. 6a] représente une vue en perspective de la cinquième partie de la roue selon l'invention dans sa position fermée,
[Fig. 6b] représente une vue en perspective de la cinquième partie de la roue selon l'invention dans sa position ouverte,
[Fig. 7] représente une seconde vue de dessus de l'intérieur de la roue selon l'invention dans sa position ouverte,
[Fig. 8] représente une vue en perspective de la roue complète en position fermée,
[Fig. 9] représente une vue en perspective de la roue complète en position ouverte.

### Description détaillée de l'invention

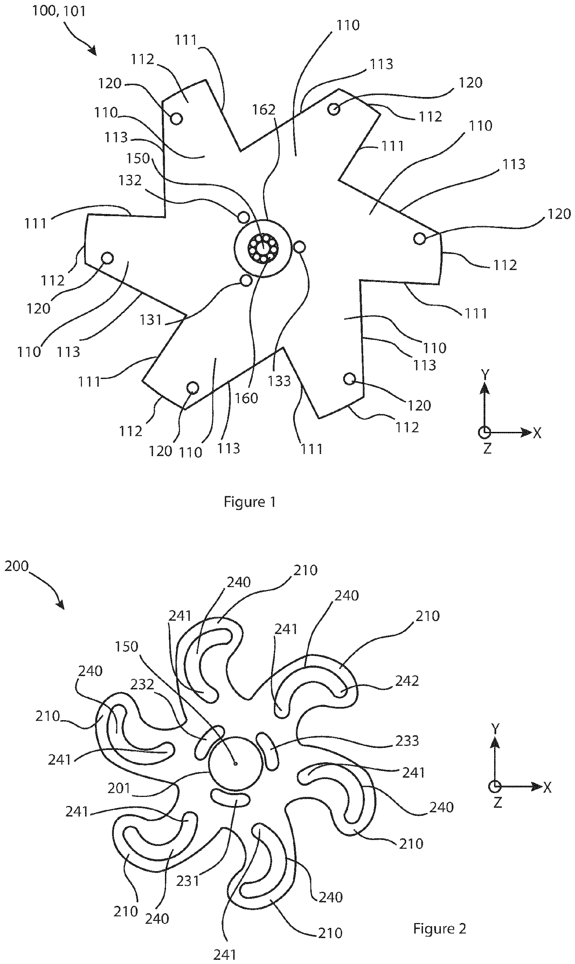

La roue selon l'invention comprend une partie externe 100 composée d'au moins une demi-coque 101 représentée vue de face sur la figure 1 selon un plan XY en référence au référentiel noté sur la figure. La partie 100 formée de la demi-coque 101 s'inscrit dans un cercle définit par son centre par lequel passe l'axe de rotation 150 de la roue et son diamètre correspondant au diamètre de la roue. L'axe central de symétrie de la partie 100 formée par la demi-coque 101 passe par l'axe de rotation 150 de la roue et est parallèle à l'axe Z des figures. La demi-coque 101 comprend une pluralité de branches 110 identiques et décalées angulairement l'une par rapport à l'autre de manière uniforme. Le nombre de branches est compris entre trois et dix et de préférence est égal à six. Chaque branche 110 comprend un bord d'attaque 111, un bord de fuite 113 et un bord distal 112 par rapport à l'axe central de rotation 150. La surface extérieure de chaque branche formée par le bord distal 112 est courbée selon un rayon de courbure correspondant au rayon de courbure de la roue. Chaque branche 110 comporte un axe de pivot 120 situé à proximité du bord distal 112.

Dans sa partie centrale, la première partie 100 formée de la demi-coque 101 comporte trois roulements 131, 132 et 133 équidistants l'un des autres et situées à égales distance de l'axe de rotation 150. La demi-coque 101 comporte également un roulement à billes 160 situé en cercle autour de l'axe 150 et à l'intérieur d'un évidement circulaire 162.

La roue comporte une seconde partie 200 représentée vue de dessus sur la figure 2. La seconde partie est plane, comporte un axe central de rotation passant par l'axe de rotation 150 de la roue et une pluralité de branches 210 dont le nombre correspond au nombre de branches 110 de la demi-coque 101. La partie 200 comprend une cavité centrale traversante 201 de forme circulaire dont le diamètre correspond de préférence au diamètre de l'évidement 160 de la demi-coque 101.

Dans sa partie centrale et autour de la cavité centrale 201, la partie 200 comporte trois rainures en arc de cercle 231, 232 et 233 équidistantes l'une des autres et situées à égale distance de l'axe de rotation 150. Les trois rainures 231, 232 et 233 ont une forme identique. Chacune des trois rainures 231, 232 et 233 comportent un bord supérieur et un bord inférieur parallèle au bord supérieur et situé par rapport à lui plus près de l'axe de rotation 150 et deux bords d'extrémités en forme de demi-cercle. Les rainures 231, 232 et 233 sont dimensionnées pour que les roulements 131, 132 et 133 puissent coulisser librement dedans.

La partie 200 comporte également dans chacune de ses branches 210 une rainure 240 courbe de forme allongée et de largeur constante. Chaque rainure 240 comporte deux extrémités, une première extrémité située du côté de l'axe de de rotation 150 et une seconde extrémité du côté de l'extrémité de la branche 210. Les premières extrémités des rainures 240 sont alignées sur la circonférence d'un premier cercle dont le centre coïncide avec l'axe de symétrie de la partie 200. Les secondes extrémités des rainures 240 sont alignées sur la circonférence d'un second cercle dont le centre coïncide avec l'axe de symétrie de la partie 200 et dont le diamètre est plus grand que celui du premier cercle. Les extrémités des rainures situées le plus près de l'axe de de rotation 150 sont appelées extrémités proximales et référencées 241 et les extrémités situées le plus éloignées de l'axe de symétrie sont appelées extrémités distales et sont référencées 242.

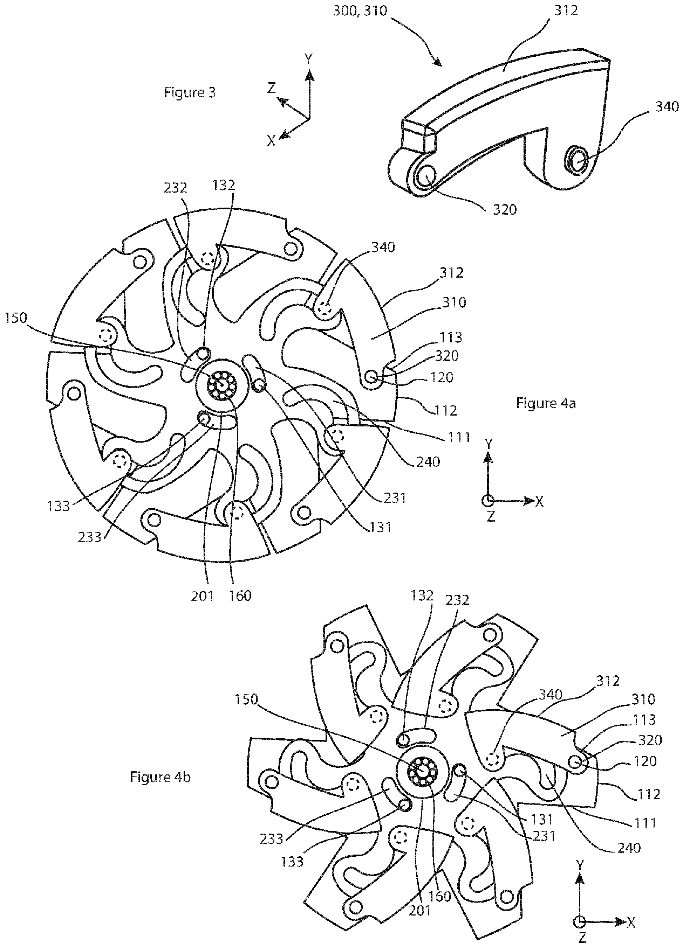

La roue selon l'invention comprend également une troisième partie 300 composée d'une pluralité de dents 310 dont le nombre correspond au nombre de branches 110 et 210, donc selon le mode de réalisation préféré de l'invention, la roue comporte six dents 310 identiques dont une est représentée en perspective sur la figure 3. Chaque dent 310 comporte une surface extérieure courbée 312 de rayon de courbure correspondant au rayon de courbure de la roue. La dent 310 comporte également une cavité traversante 320 et un roulement 340 apte à tourner librement autour de son axe qui est parallèle à l'axe Z selon le référentiel indiqué sur les figures.

Comme on peut le voir sur les figures 4a et 4b, la partie 200 de la roue est placée sur la première partie formée par la demi-coque 101 de façon à ce que les roulements 131, 132 et 133 soient à l'intérieur des trois rainures respectives 231, 232 et 233. Dans cette position, les axes de symétrie de la demi coque 101 et de la partie 200 sont alignés sur l'axe de rotation 150 de la roue. La partie 200 est mobile par rapport à la partie 100. La partie 200 peut tourner autour de son axe de rotation entre deux positions. Une première position où les roulements 131, 132 et 133 de la demi-coque 101 sont bloqués respectivement sur la première extrémité de chacune des rainures 213, 232 et 233 en arc de cercle et une seconde position où les roulements 131, 132 et 133 de la demi-coque 101 sont situées respectivement contre la seconde extrémité de chacune des rainures 231, 232 et 233 en arc de cercle. Les rainures 231, 232 et 233 sont dimensionnées pour que les roulements 131, 132 et 133 soient plaquées contre leur bord supérieur. Ceci pour mieux répartir les efforts.

Les dents 310 sont montées pivotantes sur la première partie 100 formée par la demi-coque 101 et sont entraînées par le mouvement de la seconde partie 200. Chaque dent 310 est située de façon à ce que sa cavité traversante soit traversée par un axe de pivot 120 de la demi-coque 101 pour que chaque dent puisse tourner autour de l'axe 120 sur lequel elle est reliée. D'autre part, le roulement 340 de chaque dent est situé à l'intérieur de la rainure 240 de la seconde partie 200, la largeur de la rainure 240 étant dimensionnée pour que le roulement 340 puisse coulisser de l'extrémité proximale 341 de la rainure à l'extrémité distale 342 et inversement lorsque la partie 200 passe d'une position à l'autre. Les roulements 340 des dents 310 sont représentés en pointillés car ils sont situés sur la face cachée des dents 310 sur les figures 4a et 4b. Les dents 310 sont mobiles entre deux positions.

Dans la première position de la partie 200 représentée sur la figure 4a, les roulements 340 des dents 310 sont situés aux extrémités distales des rainures 240 de la seconde partie 200. Cette position correspond à la position fermée de la roue. Dans cette position, les dents 310 sont disposées de façon à ce que leur surface extérieure 312 soit sur la circonférence d'un cercle du diamètre de la roue. Dans cette position les bords d'attaque des branches 110 de la demi-coque 101 ne sont pas apparents.

Dans la seconde position de la partie 200 représentée sur la figure 4b, les roulements 340 des dents 310 sont situés aux extrémités proximales des rainures 240 de la seconde partie 200. Cette position correspond à la position ouverte de la roue. Dans cette position, les dents 310 sont disposées en étoile et leur surface extérieure 312 longe le bord de fuite 113 des branches 110 de la demi-coque 101 de sorte que les bords d'attaque 111 des branches 110 de la demi-coque 101 sont apparents.

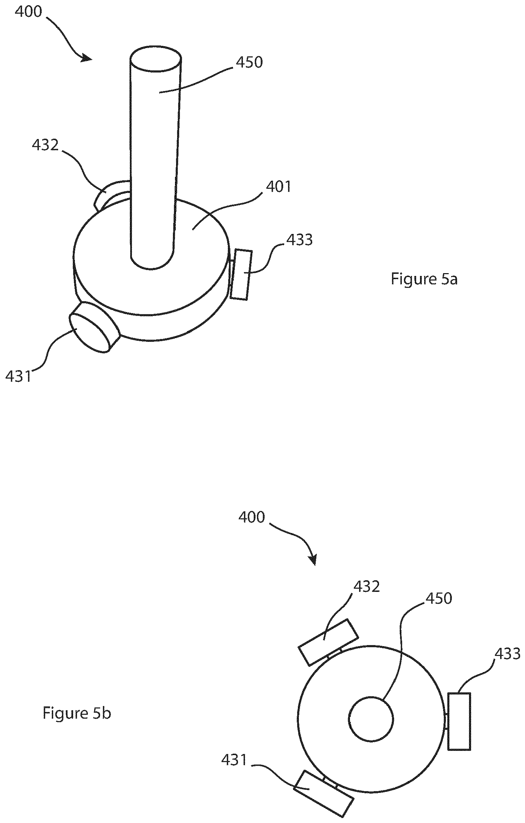

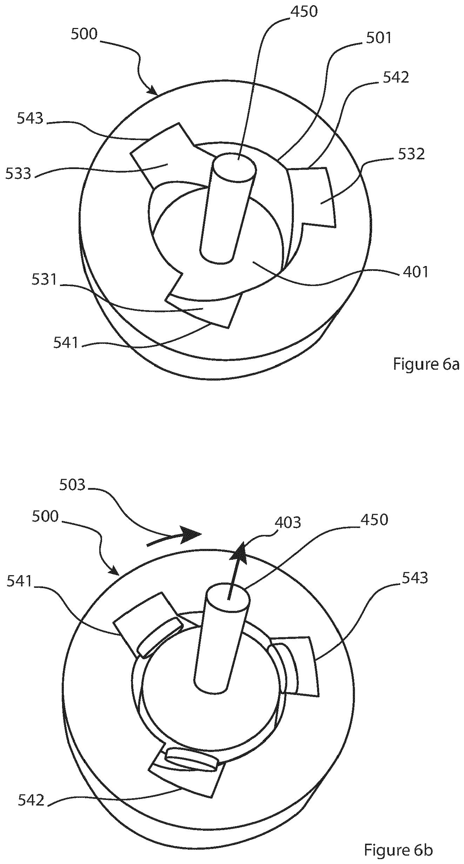

La roue selon l'invention passe d'une position à l'autre grâce à des moyens mécaniques de came et de galets tel que défini par des pièces mécaniques 400 et 500 et détaillées en référence aux figures 5a, 5b, 6a et 6b et grâce à des moyens d'entrainement extérieurs à la roue.

La pièce coulissante 400 est représentée en perspective sur la figure 5a et vue de dessus sur la figure 5b. Elle comporte principalement un cylindre 401, au moins un roulement et de préférence trois roulements 431, 432 et 433 et un axe coulissant 450 passant par l'axe de symétrie du cylindre 401. Les trois roulements sont fixés sur la surface latérale du cylindre 401 à équidistance l'un de l'autre et peuvent tourner librement autour de leur axe de rotation. Les axes de rotation des trois roulements se croisent sur l'axe de symétrie du cylindre.

La pièce coulissante 400 coopère avec la pièce 500 et les deux pièces sont représentées ensemble sur les figures 6a et 6b. La pièce 500 en forme de cylindre creux comprend en son centre une cavité traversante 501 en forme de cylindre d'axe de symétrie passant par l'axe de symétrie de la pièce 500. La pièce 500 comporte sur sa paroi interne au moins une rainure et de préférence trois rainures hélicoïdales identiques se situant à la même hauteur sur le cylindre de la pièce 500. De cette façon, les premières extrémités de chaque rainure sont équidistances l'une de l'autre et sont décalées angulairement l'une de l'autre d'un angle de 60 degrés comme on peut le voir sur les figures 6a et 6b avec les extrémités visibles 541, 542 et 543 des rainures respectives 531, 532 et 533. La première extrémité de chaque rainure est située à une distance angulaire de la seconde extrémité comprise entre 40 degrés et 60 degrés.

Le diamètre de la cavité traversante est dimensionné pour que le cylindre 401 puisse coulisser à l'intérieur librement sans être gêné sur les parois. Les roulements 431, 432 et 433 sont dimensionnés pour coulisser dans les rainures 531, 532 et 533 d'une extrémité à l'autre et inversement.

Le déplacement en translation selon la flèche 403 de la pièce coulissante 400 selon la direction de son axe coulissant 450 donc selon l'axe 150 de la roue, entraine en rotation la pièce 500 selon la flèche 503. Lorsque la pièce 400 se déplace de façon à ce que les roulements passent d'une extrémité à l'autre des rainures, la pièce 500 tourne sur son axe de symétrie d'un angle égal à la distance angulaire séparant les premières extrémités des rainures aux secondes extrémités des rainures. La pièce 500 tourne ainsi d'une première position illustrée sur la figure 6a à une seconde position illustrée sur la figure 6b. La pièce 500 joue le rôle d'une came cylindrique rotative à trois rainures hélicoïdales et les roulements sont les galets qui se déplacent dans les rainures lorsque l'axe coulissant 450 se déplace en translation.

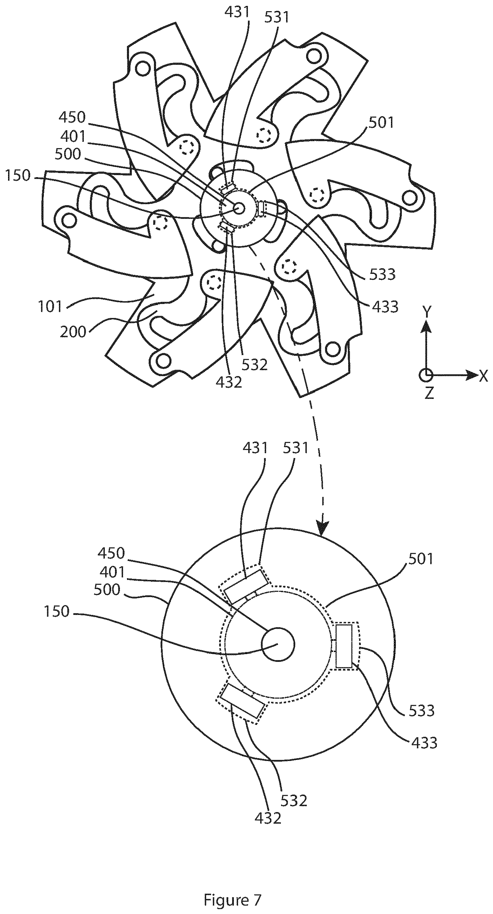

Grâce à des moyens de fixation non représentés sur les figures, la pièce 500 est fixée sur la partie 200 dans la partie centrale de façon à ce que leurs axes de symétrie coïncident et soient alignés l'un sur l'autre comme on peut le voir sur la figure 7. L'axe de symétrie de la partie 500 est donc aligné sur l'axe de rotation 150 de la roue. Le cylindre 401 est logé dans la cavité centrale 501 de la seconde partie 200. La translation de la pièce coulissante 400 dans la direction de l'axe coulissant 450 entraîne en rotation la pièce 500 autour de l'axe coulissant 450 grâce aux roulements 431, 432 et 433 qui coulissent dans les rainures 531, 532 et 533. La pièce 500 étant solidaire de la partie 200, elle l'entraine à son tour en rotation autour de l'axe coulissant 450 et donc de l'axe e rotation 150 de la roue.

Le système mécanique pour passer d'une position à l'autre présente l'avantage de ne nécessiter aucun apport d'énergie électrique sur la roue.

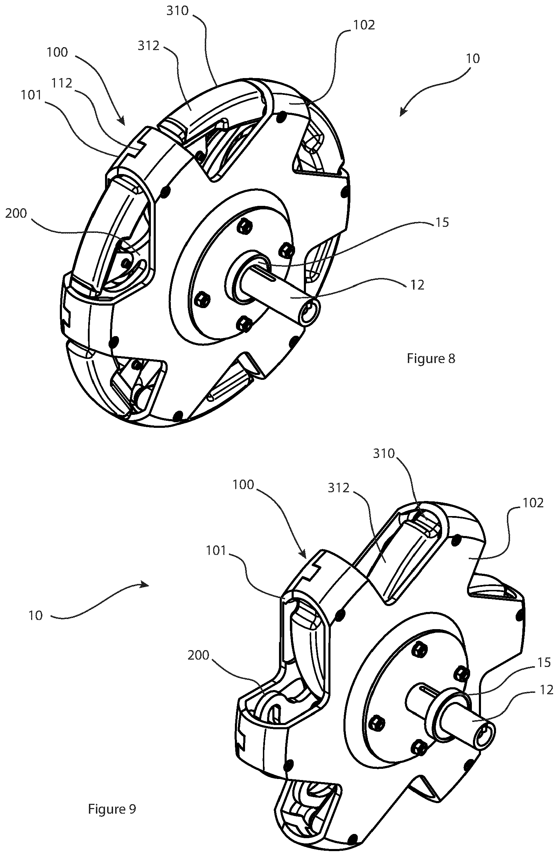

En références aux figures 8 et 9, la roue 10 est représentée complète en perspective. Elle est composée de l'assemblage de la partie externe 100, de la partie mobile 200, des dents 310, et des pièces 400 et 500 non visibles sur les figures. Selon un mode de réalisation préférentiel de l'invention, la partie externe 100 de la roue comprend également une seconde demi coque 102 de forme sensiblement identique à la première demi coque 101 qui vient recouvrir les parties constitutives de la roue en se fixant sur les bords distaux de la demi coque 101. La surface externe circulaire des branches de la première partie 100 forme une première partie de la bande de roulement de la roue. La partie externe 100 composée de deux demi coques 101 et 102 renforce la roue, la protège des poussières et la rend plus esthétique. La roue 10 est montée sur un axe 12 munie d'une bague coulissante 15 coulissant entre deux positions extrêmes. La bague 15 est reliée à la pièce coulissante 400 par son axe coulissant 450 et est solidaire de cette pièce de sorte que le mouvement de la bague 15 entraine en mouvement l'axe coulissant 450 et la pièce coulissante 400. Les deux positions extrêmes de la bague 15 correspondent chacune à une position ouverte ou fermée de la roue. La bague située dans sa position sur l'axe 12 au plus près de la roue correspond à la roue en position fermée et la bague située sur l'axe 12 dans sa position la plus éloignée de la roue correspond à la roue en position ouverte comme on peut le voir respectivement sur les figures 8 et 9.

Comme on peut le voir sur la figure 8 qui est une vue en perspective de la roue complète en position fermée, la partie 200 est dans sa première position. La roue comporte une bande de roulement continue constituée de la succession des surfaces extérieures 312 des dents 310 séparées par les surfaces externes circulaires formées le long des bords distaux 112 de la partie 100. La surface extérieure circulaire de l'ensemble des branches 110 de la première partie 100 forme la première partie de la bande de roulement de la roue et la surface extérieure de l'ensemble des surfaces extérieures 312 des dents 310 forme la seconde partie de la bande de roulement de la roue. L'ensemble des deux surfaces extérieures constitue la bande de roulement complète et circulaire de la roue dans sa position fermée. Dans cette position, la roue est parfaitement adaptée au terrain plat.
En référence à la figure 9 qui est une vue en perspective de la roue complète en position ouverte, la partie 200 est dans sa seconde position et la roue comporte des bords d'attaque sensiblement perpendiculaires aux parties circonférentielles de la bande de roulement. Dans cette position ouverte, la roue n'a pas une circonférence circulaire et continue et présente une bande de roulement discontinue adaptée pour franchir les escaliers.

La roue comprend des moyens pour maintenir bloquée la position de la roue ouverte ou fermée. Au moins une roue telle que définit selon l'invention peut équiper un robot autonome. Le robot comprend des moyens pour détecter la présence d'un escalier ou d'un obstacle à franchir et un dispositif de contrôle apte à recevoir et traiter les signaux reçus des moyens pour détecter la présence d'un escalier à franchir. Ces moyens peuvent être des capteurs de proximité, des caméras, etc. Le dispositif de contrôle commande le passage de la position ouverte à la position fermée de la roue et inversement. Ainsi, le dispositif de contrôle commande le déplacement de la bague coulissante selon si le robot passe du franchissement d'un terrain plat à un terrain accidenté tel qu'un escalier et inversement.

Le robot comprend des moyens pour maintenir la position de la bague à une ou plusieurs positions intermédiaires situées entre ses deux positions extrêmes. Ces moyens peuvent être contenues dans l'axe 12 de la roue. Ainsi, selon une alternative de réalisation, la roue peut avoir des positions intermédiaires entre la position fermée et la position ouverte qui correspondent à des utilisations sur des sols différents. Par exemple, une première position intermédiaire correspond à une ouverture de 50 % des dents 310 adapte le robot à se déplacer en terrain meuble, une seconde position intermédiaire correspondant à une ouverture de 20 % des dents 310 adapte le robot à se déplacer sur la neige. Lorsqu'une position intermédiaire est maintenue, les roulements 131, 132 et 133 de la première partie 100 sont situés à une position intermédiaire entre les deux extrémités des rainures 231, 232 et 233.

Selon une autre alternative de réalisation de la roue selon l'invention, le robot comprend des moyens pour commander l'ouverture des dents en fonction de la qualité du sol et en fonction de la vitesse de déplacement.

Le robot est de préférence équipé de deux roues ou quatre roues telles que définies dans l'invention. Les roues sont assemblées deux à deux le long d'un seul axe de rotation passant par leur centre sur un unique essieu ou sur un essieu propre à chaque roue.

## Revendications

1. Roue (10) comprenant :
- Une première partie (100) entraînée en rotation autour d'un axe central de rotation (150), muni d'une pluralité de branches (110) s'inscrivant dans un cercle de diamètre égal au diamètre de la roue, la surface externe circulaire de l'ensemble des branches formant une première partie de la bande de roulement de la roue,
- Une seconde partie (200) mobile par rapport à la première partie entre une première position et une seconde position, ladite seconde partie comprenant une pluralité de branches (210) s'inscrivant dans un cercle de centre passant par l'axe de rotation (150),
- des moyens pour passer d'une position à l'autre et inversement, la première position correspondant à une position fermée de la roue dans laquelle la roue a une circonférence circulaire complète formant une bande de roulement continue et la seconde position correspondant à une position ouverte la roue dans laquelle la roue n'a pas une circonférence circulaire complète et forme une bande de roulement discontinue,
**caractérisé en ce que** la roue comprend une troisième partie (300) composée d'une pluralité de dents (310) dont la surface externe circulaire (312) forme une seconde partie de la bande de roulement de la roue, lesdites dents étant montées pivotantes sur des axes pivots (120) de la première partie, sont entraînées par le mouvement de la seconde partie et sont mobiles entre deux positions.

2. Roue selon la revendication 1, dans laquelle les moyens pour passer de la première position à la seconde position comprennent principalement une pièce mécanique (500) fixée à la première partie (100) et une pièce mécanique coulissante (400) mobile en translation dans la partie (500) dans la direction de l'axe de rotation (150) de la roue, le déplacement de ladite pièce coulissante (400) entraînant la rotation de la pièce (500) entraînant à son tour en rotation la seconde partie (200) .

3. Roue selon la revendication 2, dans laquelle la pièce mécanique (500) est en forme de cylindre creux et comprend au moins une rainure hélicoïdale (531, 532, 533), sur sa paroi interne, la pièce mécanique coulissante (400) comprenant au moins un roulement (431, 432, 433) apte à coulisser dans la rainure (531, 532, 533) d'une extrémité à l'autre.

4. Roue selon la revendication 1, 2 ou 3, dans laquelle la première partie (100) comporte, dans sa partie centrale, trois roulements (131, 132, 133) équidistants l'un des autres et situées à égales distance de l'axe de rotation (150).

5. Roue selon l'une des revendications 1 à 4, dans laquelle la seconde partie (200) comporte dans sa partie centrale trois rainures (231, 232, 233) en arc de cercle et équidistantes l'une des autres situées à égale distance de l'axe de rotation (150), les trois rainures (231, 232, 233) étant de forme identique.

6. Roue selon l'une des revendications 1 à 5, dans laquelle la seconde partie (200) comporte dans chacune de ses branches (210) une rainure (240) courbe de forme allongée et de largeur constante, chaque rainure (240) comportant une première extrémité proximale (241) située du côté de l'axe de rotation (150) et une seconde extrémité distale (242) du côté de l'extrémité de la branche (210).

7. Roue selon la revendication 6, dans laquelle les dents (310) comprennent chacune un roulement (340) positionné à l'intérieur de la rainure (240) de la seconde partie (200), le roulement (340) coulissant de l'extrémité proximale (341) de la rainure à l'extrémité distale (342) lorsque la dent pivote autour de l'axe pivot 120.

8. Roue selon l'une des revendications 2 à 7, montée sur un axe (12) munie d'une bague coulissante (15), coulissant entre deux positions et reliée à la pièce coulissante (400) de sorte que le mouvement de la bague (15) entraine en mouvement la pièce coulissante (400), les deux positions extrêmes de la bague (15) correspondant chacune à une position ouverte ou fermée de roue.

9. Roue selon l'une des revendications 1 à 8, comprenant des moyens pour maintenir la roue dans au moins une position intermédiaire entre la position fermée et la position ouverte.

10. Robot mobile autonome **caractérisé en ce qu'**il est équipé de au moins deux roues selon l'une des revendications 1 à 9, les roues étant assemblées deux à deux le long d'un seul axe de rotation passant par leur centre sur un unique essieu ou sur un essieu propre à chaque roue.

11. Robot mobile selon la revendication 10, comprenant des moyens de détection de marche d'escalier ou d'obstacles.

## Patentansprüche

1. Rad (10), umfassend:
- einen ersten Teil (100), der um eine zentrale Drehachse (150) drehend angetrieben wird und mit mehreren Schenkeln (110) versehen ist, die in einem Kreis liegen, dessen Durchmesser gleich dem Durchmesser des Rads ist, wobei die kreisförmige Außenfläche der Gesamtheit der Schenkel einen ersten Teil des Laufstreifens des Rads bildet,
- einen zweiten Teil (200), der in Bezug auf den ersten Teil zwischen einer ersten Position und einer zweiten Position beweglich ist, wobei der zweite Teil mehrere Schenkel (210) umfasst, die in einem Kreis liegen, dessen Mittelpunkt durch die Drehachse (150) verläuft,
- Mittel zum Wechseln aus einer Position in die andere und umgekehrt, wobei die erste Position einer geschlossenen Position des Rads entspricht, in der das Rad einen vollständigen kreisförmigen Umfang aufweist, der einen kontinuierlichen Laufstreifen bildet, und wobei die zweite Position einer offenen Position des Rads entspricht, in der das Rad keinen vollständigen kreisförmigen Umfang aufweist und einen diskontinuierlichen Laufstreifen bildet,
**dadurch gekennzeichnet, dass** das Rad einen dritten Teil (300) umfasst, der aus mehreren Zähnen (310) zusammengesetzt ist, deren kreisförmige Außenfläche (312) einen zweiten Teil des Laufstreifens des Rads bildet, wobei die Zähne an Schwenkachsen (120) des ersten Teils schwenkbar montiert sind, durch die Bewegung des zweiten Teils angetrieben werden und zwischen zwei Positionen beweglich sind.

2. Rad nach Anspruch 1, wobei die Mittel zum Wechseln aus der ersten Position in die zweite Position im Wesentlichen ein am ersten Teil (100) befestigtes mechanisches Teil (500) und ein mechanisches Gleitteil (400), das im Teil (500) in Richtung der Drehachse (150) des Rads translatorisch beweglich ist, umfassen, wobei die Bewegung des Gleitteils (400) die Drehung des Teils (500) bewirkt, das seinerseits den zweiten Teil (200) drehend antreibt.

3. Rad nach Anspruch 2, wobei das mechanische Teil (500) die Form eines Hohlzylinders aufweist und an seiner Innenwand mindestens eine schraubenförmige Nut (531, 532, 533) umfasst, wobei das mechanische Gleitteil (400) mindestens ein Lager (431, 432, 433) umfasst, das in der Nut (531, 532, 533) von einem Ende zum anderen gleiten kann.

4. Rad nach Anspruch 1, 2 oder 3, wobei das erste Teil (100) in seinem Mittelteil drei Lager (131, 132, 133) aufweist, die in gleichen Abständen zueinander und in gleichem Abstand zur Drehachse (150) angeordnet sind.

5. Rad nach einem der Ansprüche 1 bis 4, wobei der zweite Teil (200) in seinem Mittelteil drei Nuten (231, 232, 233) aufweist, die kreisbogenförmig, in gleichen Abständen zueinander und in gleichem Abstand zur Drehachse (150) angeordnet sind, wobei die drei Nuten (231, 232, 233) eine identische Form aufweisen.

6. Rad nach einem der Ansprüche 1 bis 5, wobei der zweite Teil (200) in jedem seiner Schenkel (210) eine gebogene Nut (240) mit einer länglichen Form und konstanter Breite aufweist, wobei jede Nut (240) ein erstes proximales Ende (241), das sich auf der Seite der Drehachse (150) befindet, und ein zweites distales Ende (242) auf der Seite des Endes des Schenkels (210) aufweist.

7. Rad nach Anspruch 6, wobei die Zähne (310) jeweils ein Lager (340) umfassen, das innerhalb der Nut (240) des zweiten Teils (200) positioniert ist, wobei das Lager (340) vom proximalen Ende (341) der Nut zum distalen Ende (342) gleitet, wenn sich der Zahn um die Schwenkachse (120) dreht.

8. Rad nach einem der Ansprüche 2 bis 7, das auf einer Achse (12) montiert ist, die mit einem Gleitring (15) versehen ist, der zwischen zwei Positionen gleitet und so mit dem Gleitteil (400) verbunden ist, dass die Bewegung des Rings (15) das Gleitteil (400) in Bewegung versetzt, wobei die beiden Endpositionen des Rings (15) einer offenen bzw. geschlossenen Position des Rads entsprechen.

9. Rad nach einem der Ansprüche 1 bis 8, umfassend Mittel zum Halten des Rads in mindestens einer Zwischenposition zwischen der geschlossenen Position und der offenen Position.

10. Autonomer mobiler Roboter, **dadurch gekennzeichnet, dass** er mit mindestens zwei Rädern nach einem der Ansprüche 1 bis 9 ausgestattet ist, wobei die Räder paarweise entlang einer einzigen, durch ihren Mittelpunkt verlaufenden Drehachse auf einer einzigen Achse oder auf einer eigenen Achse für jedes Rad angeordnet sind.

11. Mobiler Roboter nach Anspruch 10, umfassend Mittel zur Erkennung von Treppenstufen oder Hindernissen.

## Claims

1. A wheel (10) comprising:
- a first part (100) driven in rotation around a central axis of rotation (150), provided with a plurality of branches (110) inscribed in a circle whose diameter is equal to that of the wheel, the circular outer surface of all of the branches forming a first part of the tread of the wheel,
- a second part (200) movable relative to the first part between a first position and a second position, said second part comprising a plurality of branches (210) inscribed in a circle whose center coincides with the axis of rotation (150),
- means for moving from one position to the other and vice versa, the first position corresponding to a closed position of the wheel in which the wheel has a complete circular circumference forming a continuous tread and the second position corresponding to an open position of the wheel in which the wheel does not have a complete circular circumference and forms a discontinuous tread,
**characterized in that** the wheel comprises a third part (300) composed of a plurality of teeth (310) whose circular outer surface (312) forms a second part of the tread of the wheel, said teeth being pivotably mounted on pivot pins (120) of the first part, are driven by the movement of the second part and are movable between two positions.

2. The wheel according to claim 1, in which the means for moving from the first position to the second position mainly comprise a mechanical part (500) fixed to the first part (100) and a sliding mechanical part (400) movable in translation in the part (500) in the direction of the axis of rotation (150) of the wheel, the movement of said sliding part (400) driving the rotation of the part (500) which, in turn, drives the rotation of the second part (200).

3. The wheel according to claim 2, in which the mechanical part (500) is in the form of a hollow cylinder and comprises at least one helical groove (531, 532, 533) on its internal wall, the sliding mechanical part (400) comprising at least one bearing (431, 432, 433) able to slide in the groove (531, 532, 533) from one end to the other.

4. The wheel according to claim 1, 2 or 3, in which the first part (100) comprises, in its central part, three bearings (131, 132, 133) equidistant from each other and located at equal distances from the axis of rotation (150).

5. The wheel according to one of claims 1 to 4, in which the second part (200) comprises, in its central part, three grooves (231, 232, 233) in the shape of an arc of a circle and equidistant from each other located at an equal distance from the axis of rotation (150), the three grooves (231, 232, 233) being identical in shape.

6. The wheel according to any of claims 1 to 5, in which the second part (200) comprises, in each of its branches, (210) a curved groove (240) of elongated shape and of constant width, each groove (240) comprising a first proximal end (241) located on the side of the axis of rotation (150) and a second distal end (242) on the side of the end of the branch (210).

7. The wheel according to claim 6, wherein each tooth (310) includes a bearing (340) located within the groove (240) of the second part (200), the bearing (340) sliding from the proximal end (341) of the groove to the distal end (342) as the tooth pivots about the pivot pin 120.

8. The wheel according to any of claims 2 to 7, mounted on a shaft (12) provided with a sliding ring (15), sliding between two positions and connected to the sliding part (400) so that the movement of the ring (15) drives the sliding part (400) in motion, the two extreme positions of the ring (15) each corresponding to an open or closed position of the wheel.

9. The wheel according to any of claims 1 to 8, comprising means for maintaining the wheel in at least one intermediate position between the closed position and the open position.

10. An autonomous mobile robot **characterized in that** it is equipped with at least two wheels according to any of claims 1 to 9, the wheels being assembled two by two along a single axis of rotation passing through their center on a single axle or on an axle specific to each wheel.

11. A mobile robot according to claim 10, comprising means for detecting stair steps or obstacles.
